# EUROPÄISCHE PATENTSCHRIFT

(11) **EP 2 222 995 B1**
(45) Veröffentlichungstag und Bekanntmachung des Hinweises auf die Patenterteilung: **10.12.2014**
(21) Anmeldenummer: 08865799.4
(22) Anmeldetag: 10.12.2008
(51) Int. Cl.: F16L 25/01, F16L 53/00, H05B 3/42

(54) **LEITUNGSVERBINDER FÜR MEDIENLEITUNGEN SOWIE KONFEKTIONIERTE MEDIENLEITUNG MIT MINDESTENS EINEM SOLCHEN LEITUNGSVERBINDER**
LINE CONNECTOR FOR MEDIA LINES AND READY-MADE MEDIA LINE WITH AT LEAST ONE SUCH LINE CONNECTOR
RACCORD POUR CONDUITS POUR FLUIDES AINSI QUE CONDUIT CONFECTIONNÉ POUR FLUIDES PRÉSENTANT AU MOINS UN RACCORD POUR CONDUITS DE CE TYPE

(30) Priorität: 21.12.2007 DE 202007018086 U; 09.04.2008 DE 202008004954 U
(43) Veröffentlichungstag der Anmeldung: 01.09.2010
(73) Patentinhaber: Voss Automotive GmbH, 51688 Wipperfürth (DE)
(72) Erfinder: LECHNER, Martin, 51789 Lindlar (DE); BORGMEIER, Olav, 42499 Hückeswagen (DE); SCHWARZKOPF, Otfried, 51515 Kürten (DE); LINNEPE, Andreas, 58515 Lüdenscheid (DE); MITTERER, Reiner, 51688 Wipperfürth (DE); ROSENFELDT, Sascha, 44137 Dortmund (DE); BRANDT, Josef, 51688 Wipperfürth (DE)
(74) Vertreter: Patentanwälte Dr. Solf & Zapf
(86) Internationale Anmeldenummer: PCT/EP2008/067159
(87) Internationale Veröffentlichungsnummer: WO 2009/080501

(56) Entgegenhaltungen:
- EP-A- 1 610 049
- EP-A- 1 777 452
- EP-A1- 0 379 635
- WO-A-2007/073286
- DE-B3- 10 326 894
- US-A1- 2007 257 026

## Beschreibung

Die vorliegende Erfindung betrifft einen Leitungsverbinder für Medienleitungen gemäß dem Oberbegriff des Anspruchs 1.

Weiterhin betrifft die Erfindung gemäß dem Anspruch 16 auch eine konfektionierte Medienleitung unter Verwendung mindestens eines derartigen Leitungsverbinders.

Solche Leitungsverbinder dienen zum gegenseitigen Verbinden von mindestens zwei Medienleitungen oder zur Anschlussverbindung mindestens einer Leitung an ein beliebiges Aggregat. Dabei können solche Leitungsverbinder und Medienleitungen insbesondere in Kraftfahrzeugen für solche Medien eingesetzt werden, die auf Grund ihres Gefrierpunktes bereits bei relativ hohen Umgebungstemperaturen zum Gefrieren neigen. Dadurch können bestimmte Funktionen beeinträchtigt werden. Dies ist beispielsweise bei Wasserleitungen für die Scheibenwaschanlage der Fall sowie vor allem auch bei Leitungen für eine wässrige Hamstofflösung, die als NOₓ-Reduktionsadditiv für Dieselmotoren mit so genannten SCR-Katalysatoren eingesetzt wird. Deshalb können bei niedrigen Temperaturen elektrische Heizmittel aktiviert werden, um das Gefrieren zu vermeiden oder um das bereits gefrorene Medium aufzutauen.

Ein Leitungsverbinder der dem Oberbegriff des Anspruchs 1 entsprechenden Art ist in der WO 2007/073286 A1 beschrieben. Dabei ist eine elektrische Heizeinrichtung über ein Clipelement außen an dem Fluidverbinder befestigt. Im Anschluss an den Bereich der Heizeinrichtung ist in einem Übergangsbereich zwischen dem Fluidverbinder, der als Steckerteil einer Fluid-Steckverbindung ausgebildet ist, und der Fluidleitung ein hülsenförmiges Übergangsstück vorgesehen, das zwischen dem Fluidverbinder und einem Ende eines die Fluidleitung umschließenden Schutzrohrs angeordnet ist und in einer Ausführung einen Abzweig für elektrische Anschlussleiter aufweist. Die Heizeinrichtung liegt daher frei und ungeschützt im Außenbereich des Fluidverbinders. Zwischen der Leitung, die ebenfalls mit elektrischen Heizmitteln ausgestattet ist, und dem Übergangsstück ist ein Hohlraum gebildet, der auch zur Aufnahme von elektrischen Verbindungen der Heizmittel dient. Die Verbindungen sind nur lose in diesem Hohlraum untergebracht, so dass sie gegen mechanische und sonstige Beanspruchungen nur unzureichend geschützt sind. Durch die lose, undefinierte Anordnung könnten die elektrischen Verbindungen miteinander in Kontakt geraten und eventuell einen Kurzschluss verursachen. Außerdem ist die Herstellung und Montage der bekannten Medienleitung schwierig.

Der vorliegenden Erfindung liegt die Aufgabe zu Grunde, einen Leitungsverbinder der genannten Art zu schaffen, der bei einfacher und prozesssicherer Herstellbarkeit gute und dauerhaft sichere Gebrauchseigenschaften gewährleistet. Zudem soll auch eine konfektionierte Leitung für den gleichen Zweck zur Verfügung gestellt werden.

Erfindungsgemäß wird dies durch die Merkmale des Anspruchs 1 erreicht. Vorteilhafte Ausgestaltungen sind in den abhängigen Ansprüchen enthalten. Eine konfektionierte Medienleitung ist Gegenstand des Anspruchs 16.

Durch die den Fluidverbinder zumindest im Bereich der Heizmittel umschließende Kapselung sind die Heizmittel des Fluidverbinders, die den Fluidkanal zumindest teilweise umschließen und von mindestens einem über den Außenumfang des Fluidverbinders verlaufenden Heizleiter gebildet sind, effektiv vor äußeren Einflüssen geschützt. Außerdem wird auch eine zusätzliche thermische Isolation nach außen erreicht. So kann durch einen innerhalb der Kapselung gebildeten Luftspalt eine gute und gleichmäßige Temperaturverteilung erreicht werden. Ein zumindest teilweises Vergießen trägt ebenfalls zur Wärmeisolation bei. Erfindungsgemäß ist die Kapselung auch zum Umschließen eines Endbereiches einer an dem Anschlussabschnitt angeschlossenen Fluidleitung sowie auch eines Endbereiches einer rohrförmigen Umhüllung der Fluidleitung ausgebildet. Diese Umhüllung ist insbesondere von einem Wellrohr gebildet, dessen Endbereich in der Kapselung vorzugsweise formschlüssig fixiert wird. Alle erforderlichen elektrischen Verbindungen zwischen den Heizmitteln des Fluidverbinders, äußeren Versorgungsleitern und bevorzugt vorhandenen Heizmitteln der Fluidleitung können gut geschützt innerhalb der Kapselung untergebracht werden. Ein besonders effektiver Schutz kann erreicht werden, indem die elektrischen Verbindungen (Kontaktstellen, abisolierte Stellen) durch Umspritzen und/oder Vergießen in eine Kunststoff-Formmasse eingebettet werden können. Die äußeren Versorgungsleiter können über den erfindungsgemäßen Abzweig der Kapselung nach außen geführt werden. Dabei ist es vorteilhaft, wenn der Abzweig zur formschlüssigen Aufnahme eines Endbereiches einer rohrförmigen, insbesondere ebenfalls von einem Wellrohr gebildeten Leiterhülle für die Versorgungsleiter ausgebildet ist. Alternativ kann auch vorgesehen sein, dass der Abzweig ein elektrisches Anschlusselement insbesondere in Form eines Steckanschlusses für externe Versorgungsleiter aufweist. Dabei ist das Anschlusselement innerhalb der Kapselung mit den Heizmitteln des Fluidverbinders und gegebenenfalls mit Heizmitteln der Fluidleitung verbunden.

In einer vorteilhaften Ausgestaltung der Erfindung ist der Abzweig als separates, mit der Kapselung verbundenes oder verbindbares Abzweigteil ausgebildet. Durch diese Ausgestaltung des Abzweigs als separates Abzweigteil ergeben sich vorteilhafterweise unterschiedliche Anwendungsmöglichkeiten. So kann die Kapselung grundsätzlich auch ohne Abzweig verwendet werden. Bei Bedarf kann das Abzweigteil im Bereich einer Öffnung der Kapselung befestigt werden. Die Öffnung kann vorgefertigt sein oder aber durch Entfernen eines Bereiches der Kapselung gebildet werden. Dabei kann ein Wandungsteil über Sollbruchstellen herausgebrochen werden. Die Befestigung des Abzweigteils erfolgt insbesondere über Rastmittel. Das Abzweigteil kann aber auch formschlüssig mit der Kapselung verbunden sein. Im Falle eines spitz- oder stumpfwinkligen Abzweig-Winkels zur Leitungsachse sowie auch bei einem zur Leitungsachse etwa parallel versetzten Abzweig ergibt sich weiterhin die vorteilhafte Möglichkeit, das Abzweigteil in unterschiedlichen Orientierungen seiner Abzweigachse montieren zu können.

Weitere vorteilhafte Ausgestaltungsmerkmale der Erfindung sind in den abhängigen Ansprüchen sowie in der anschließenden Beschreibung enthalten.

Anhand von einigen in der Zeichnung veranschaulichten, bevorzugten Ausführungsbeispielen soll die Erfindung genauer erläutert werden. Dabei zeigen:
- Fig.1: eine vergrößerte Seitenansicht eines erfindungsgemäßen Leitungsverbinders mit einem Endbereich einer angeschlossenen Fluidleitung, wobei die erfindungsgemäße Kapselung geöffnet in Form nur einer von zwei Gehäusehälften dargestellt ist,
- Fig. 2: ein schematisches Ersatzschaltbild von elektrischen Heizmitteln des Fluidverbinders und der Fluidleitung,
- Fig. 3 u. 4: verschiedene Verschaltungsvarianten der Heizmittel, wobei in Fig. 3a und 4a jeweils ein schematisches Schaltbild und in den Fig. 3b und 4b jeweils der Verbinder im Bereich der elektrischen Verbindungen veranschaulicht ist,
- Fig. 5: eine gesonderte Ansicht auf die Innenseite der Gehäusehälfte zu Fig. 1,
- Fig. 6: eine Ansicht der Gehäusehälfte in Pfeilrichtung VI gemäß Fig. 5,
- Fig. 7: eine Ansicht auf die Außenseite der Gehäusehälfte in Pfeilrichtung VII gemäß Fig. 6,
- Fig. 8: eine Seitenansicht auf eine alternative Ausführungsform einer erfindungsgemäßen Kapselung in Form eines mehrteiligen Außengehäuses,
- Fig. 9: eine gesonderte Perspektivansicht eines Abzweiggehäuses zur Ausführung gemäß Fig. 8 in einem geöffneten Zustand,
- Fig. 10: eine Darstellung analog zu Fig. 1 einer alternativen Ausführungsform,
- Fig. 11: eine zweite Gehäusehälfte zur Ausführung nach Fig. 10,
- Fig. 12: eine Perspektivansicht einer konfektionierten Medienleitung, die zum Teil der Ausführung gemäß Fig. 8 entspricht,
- Fig. 13: eine Seitenansicht einer konfektionierten Medienleitung in einer besonderen Ausgestaltung mit teilweise aufgeschnittener Leitungs-Umhüllung,
- Fig. 14: eine Ausschnittsvergrößerung des Bereiches XIV in Fig. 13,
- Fig. 15: ein elektrisches Ersatzschaltbild zur Ausführung gemäß Fig. 13,
- Fig. 16: eine Seitenansicht einer besonderen Ausgestaltung des erfindungsgemäßen Leitungsverbinders mit einem separaten, aufgerasteten Abzweigteil,
- Fig. 17: einen Längsschnitt des Leitungsverbinders gemäß Fig. 16,
- Fig. 18: eine Ansicht wie in Fig. 16, jedoch in einem alternativen Montagezustand des Abzweigteils,
- Fig. 19: eine Perspektivansicht einer alternativen Ausführungsform des Leitungsverbinders,
- Fig. 20: eine gegenüber Fig. 19 vergrößerte Seitenansicht dieses Leitungsverbinders,
- Fig. 21: eine Ansicht in Pfeilrichtung XXI gemäß Fig. 20,
- Fig. 22: eine Perspektivansicht einer ersten Ausführungsform des Abzweigteils für die Ausführung des Leitungsverbinders gemäß Fig. 19 bis 21,
- Fig. 23: eine Perspektivansicht des Abzweigteils gemäß Fig. 22 in einem geöffneten Zustand eines Aufnahmeabschnittes für eine Leiterhülle,
- Fig. 24: eine Perspektivansicht einer zweiten Ausführungsform des Abzweigteils für die Ausführung des Leitungsverbinders gemäß Fig. 16 bis 18,
- Fig. 25: eine Darstellung des Abzweigteils gemäß Fig. 24 in einem Zustand analog zu Fig. 23,
- Fig. 26: eine Skizze zur Erläuterung einer alternativen Ausführungsform des Leitungsverbinders in einem Längsschnitt,
- Fig. 27: einen vergrößerten Teilschnitt in der Ebene A-A gemäß Fig. 26 in einem mit dem zugehörigen Abzweigteil verbundenen Zustand der Kapselung und
- Fig. 28: eine weitere Ausführungsvariante in einer Darstellung ähnlich Fig. 19.

In den verschiedenen Figuren der Zeichnung sind gleiche Teile stets mit den gleichen Bezugszeichen versehen.

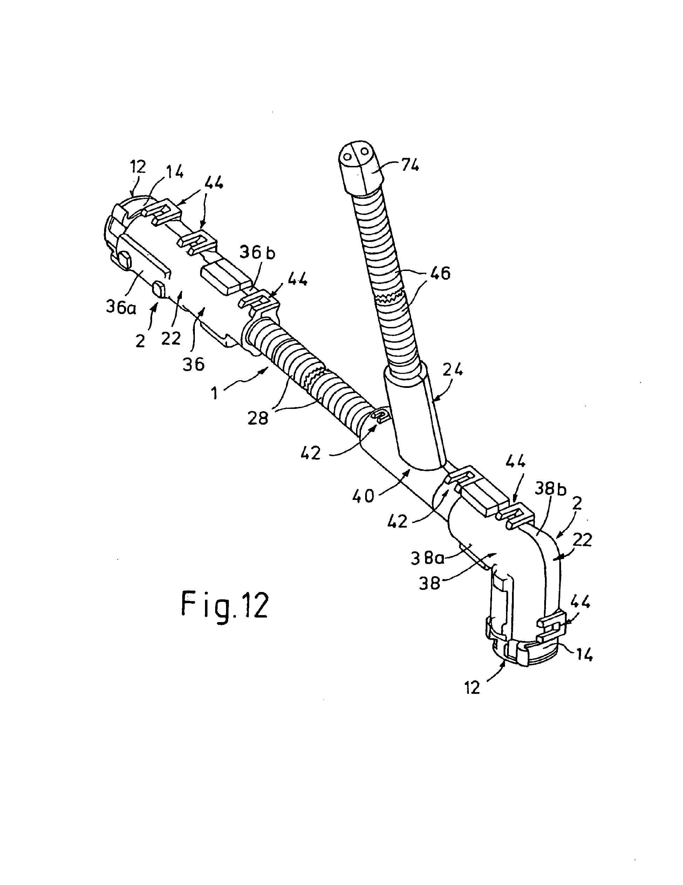

In Fig. 12 ist beispielhaft eine konfektionierte Medienleitung 1 dargestellt, die beidendig je einen erfindungsgemäßen Leitungsverbinder 2 aufweist. Dabei kann es sich bei jedem der beiden Leitungsverbinder 2 wahlweise um einen Winkelverbinder (wie beispielhaft rechts dargestellt) oder einen geradlinigen Verbinder (wie z. B. links gezeigt) handeln. Dies bedeutet, dass beidseitig völlig beliebige Verbinder-Geometrien möglich sind. Außerdem können die Anschlussbereiche der Verbinder beliebige Orientierungen aufweisen (z. B. auch relativ zueinander um die Leitungsachse verdreht sein).

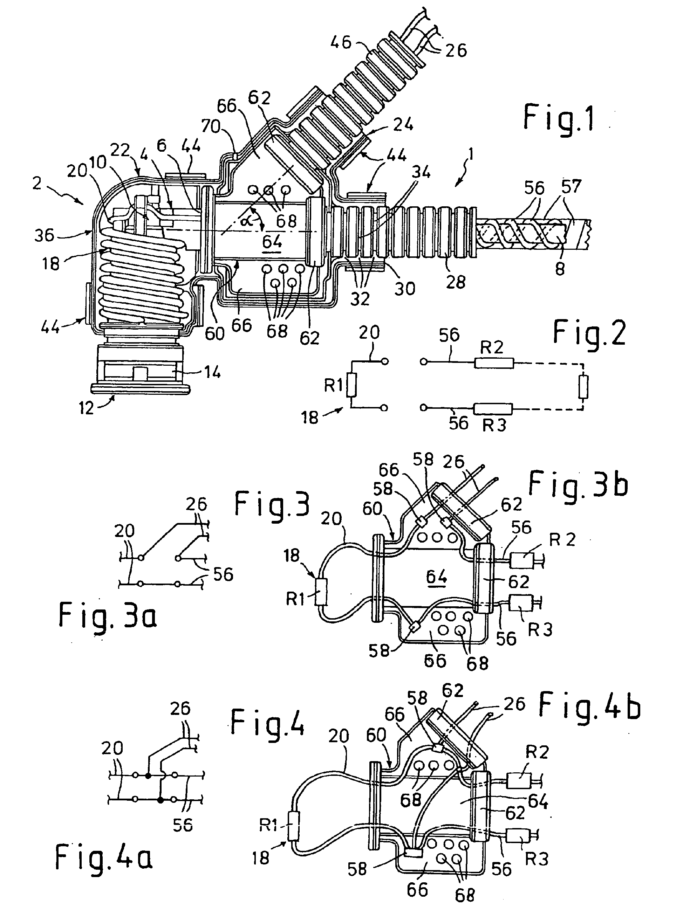

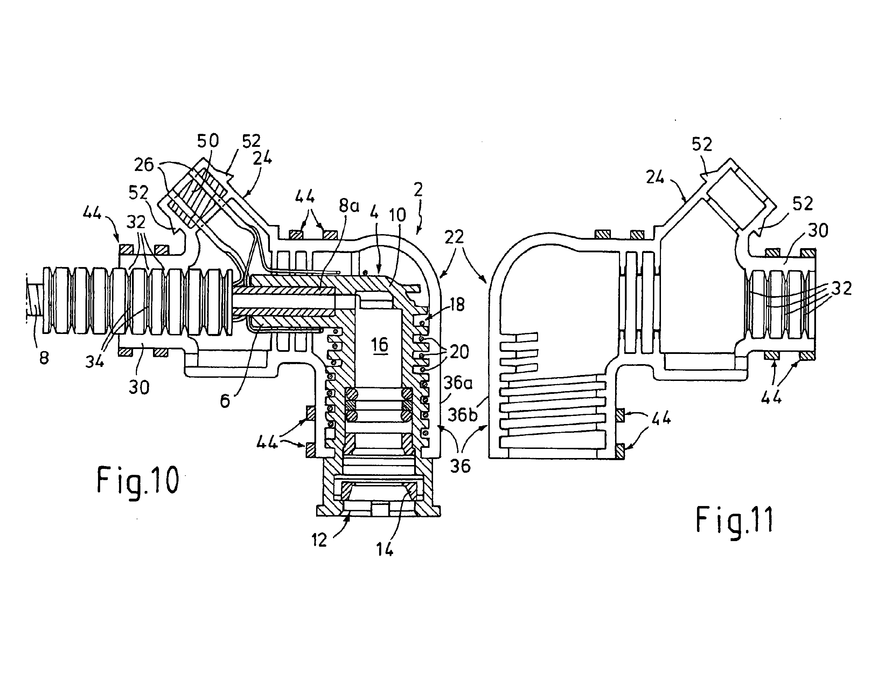

Wie sich aus Fig. 1 und 10 ergibt, besteht der erfindungsgemäße Leitungsverbinder 2 aus einem Fluidverbinder 4 mit mindestens einem Anschlussabschnitt 6 zur Verbindung mit einem Leitungsende 8a (siehe Fig. 10) einer Fluidleitung 8. An den Anschlussabschnitt 6 schließt sich ein Übergangsabschnitt 10 an, der vorzugsweise in einen zweiten Anschlussabschnitt 12 übergeht, der bevorzugt als Steckanschluss eines Fluid-Stecksystems ausgebildet ist. In den dargestellten Beispielen ist der Steckanschluss als Muffe zur Aufnahme eines nicht dargestellten Fluidsteckers ausgebildet. Zur lösbaren Arretierung des eingesteckten Fluidsteckers ist im Bereich der Muffe eine radial elastische Halteklammer 14 angeordnet. Alternativ zu dieser bevorzugten Ausführung kann der zweite Anschlussabschnitt 12 jedoch auch als Stecker ausgebildet sein. Außerdem kann der Fluidverbinder 4 auf der Seite des zweiten Anschlussabschnittes 12 auch entweder direkt mit einem beliebigen Aggregat verbunden oder analog zu dem ersten Anschlussabschnitt 6 zur Verbindung mit einer weiteren (zweiten) Fluidleitung ausgebildet sein.

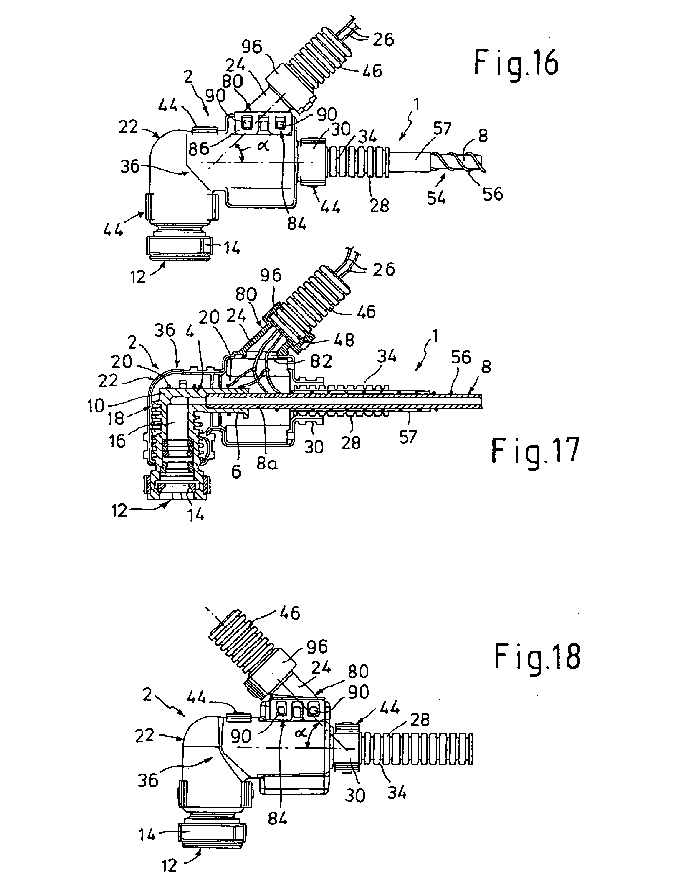

Der erste Anschlussabschnitt 6 ist bevorzugt als Aufnahme zum Einstecken des Leitungsendes 8a ausgebildet (s. insbesondere Fig. 10 und 17), wobei vorzugsweise eine unlösbare, stoffschlüssige Verbindung durch Verkleben, Verschweißen oder An-/ Umspritzen erfolgt, insbesondere durch Laserschweißen. Dazu bestehen der Fluidverbinder 4 und die Fluidleitung 8 jeweils aus einem verschweißbaren Kunststoff, wobei der Fluidverbinder 4 zumindest im Bereich des ersten Anschlussabschnittes 6 für Laserstrahlen transparent ausgebildet ist. Der Fluidverbinder 4 weist einen inneren Fluidkanal 16 auf.

Bereichsweise, und zwar insbesondere zumindest im Bereich des Übergangsabschnittes 10, weist der Fluidverbinder 4 elektrische Heizmittel 18 auf. Diese Heizmittel 18 umschließen zweckmäßigerweise den Fluidkanal 16 zumindest teilweise und sind dazu von mindestens einem über den Außenumfang des Fluidverbinders 4 verlaufenden Heizleiter 20 gebildet.

Erfindungsgemäß weist der Leitungsverbinder 2 eine den Fluidverbinder 4 zumindest im Bereich der Heizmittel 18 umschließende Kapselung 22 auf. Diese Kapselung 22 weist ihrerseits einen rohrstückförmigen Abzweig 24 für elektrische Versorgungsleiter 26 für die Heizmittel 18 auf.

Erfindungsgemäß ist die Kapselung 22 auch zum Umschließen eines Endbereiches der an dem Anschlussabschnitt 6 angeschlossenen Fluidleitung 8 und eines Endbereiches einer rohrförmigen Umhüllung 28 der Fluidleitung 8 ausgebildet. Mit Vorteil kann die Umhüllung 28 insbesondere formschlüssig innerhalb der Kapselung 22 fixiert sein. Dazu weist die Kapselung 22 einen Rohransatz 30 mit inneren Umfangsrippen 32 auf, die radial in umfängliche Rillen 34 der insbesondere von einem Wellrohr (parallel gewelltes Schutzrohr insbesondere aus Kunststoff) gebildeten Umhüllung 20 eingreifen.

In den Ausführungen gemäß Fig. 1, 5 bis 7, 10 und 11 sowie auch gemäß Fig. 16 bis 28 besteht die Kapselung 22 aus einem den Abzweig 24 aufweisenden äußeren Verbindergehäuse 36. Dieses Verbindergehäuse 36 weist auch den Rohransatz 30 zur formschlüssigen Aufnahme des Endbereiches der Umhüllung 28 der Fluidleitung 8 auf.

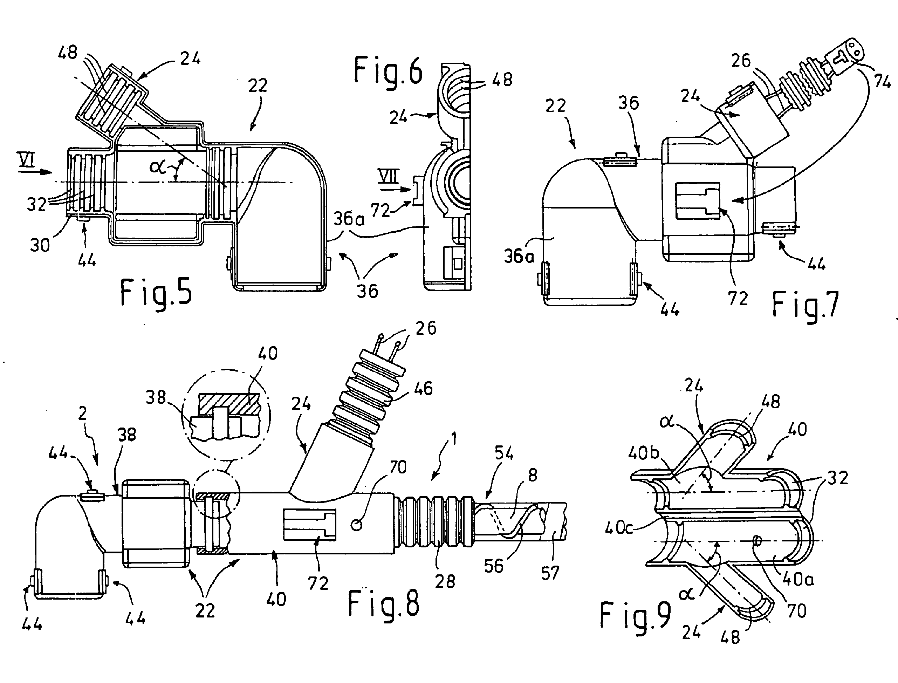

In der alternativen Ausführung gemäß Fig. 8 und 9 (vgl. auch den rechten Endbereich der Perspektivdarstellung in Fig. 12) besteht die Kapselung 22 einerseits aus einem Verbindergehäuse 38 und andererseits einem zusätzlichen, den Abzweig 24 aufweisenden Abzweiggehäuse 40. Das Abzweiggehäuse 40 besteht aus einem rohrförmigen Durchgangsabschnitt für die Fluidleitung 8 und dem von dem Durchgangsabschnitt abzweigenden Abzweig 24. Dabei ist der Durchgangsabschnitt einendig direkt mit dem Verbindergehäuse 38 verbunden oder verbindbar. Anderendig ist das Abzweiggehäuse 40 zur formschlüssigen Aufnahme des Endbereiches der Umhüllung 28 der Fluidleitung 8 ausgebildet. Dazu ist dieser Endbereich des Abzweiggehäuses 40 gemäß Fig. 9 analog zu dem Rohransatz 30 mit mindestens einer inneren Umfangsrippe 32 zum radialen Eingriff in eine der Rillen 34 der Umhüllung 28 ausgebildet. Für ihre gegenseitige Verbindung weisen das Verbindergehäuse 38 und das Abzweiggehäuse 40 bestimmte Eingriffskonturen auf (s. dazu die Ausschnittvergrößerung in Fig. 8), wobei es sich um eine relativ zueinander verdrehbare Verbindung handeln kann, was den Vorteil hat, dass der Abzweig 24 hinsichtlich seiner Ausrichtung durch Verdrehen des Abzweiggehäuses 40 eingestellt werden kann. Alternativ kann es sich auch um eine gegen relative Verdrehungen gesicherte Verbindung handeln, insbesondere durch einen von der Kreisform abweichenden Eingriffsquerschnitt, beispielsweise einen ovalen Umfang.

Die zweiteilige Ausführung gemäß Fig. 8 hat den weiteren Vorteil, dass das Verbindergehäuse 38 beliebig gestaltet werden kann, beispielsweise wie dargestellt für einen Winkelverbinder oder als geradliniger Verbinder. Das Abzweiggehäuse 40 kann für alle verschiedenen Ausführungen des Verbindergehäuses 38 in gleicher Ausführung universell verwendet werden.

Gemäß Fig. 9 besteht das Abzweiggehäuse 40 mit Vorteil aus zwei zu einer Teilungsebene im Wesentlichen symmetrischen Gehäuse-Halbschalen 40a und 40b, die vorzugsweise miteinander über Rastmittel 42 verrastbar sind (vgl. Fig. 12). Zudem können die Halbschalen 40a, 40b einstückig miteinander über ein Filmscharnier 40c verbunden sein, wobei das Abzweiggehäuse 40 durch Zusammenklappen der Halbschalen 40a, 40b verschließbar ist.

Auch das Verbindergehäuse 36 bzw. 38 besteht mit Vorteil aus zwei zu einer Teilungsebene im Wesentlichen symmetrischen Gehäuse-Halbschalen a und b, die ebenfalls bevorzugt miteinander über Rastmittel 44 verrastbar sind. Die Gehäuse-Halbschalen 36a, b bzw. 38a, b sind in den dargestellten Beispielen als getrennte, vorzugsweise zumindest annähernd identische Formteile ausgebildet. Alternativ kann aber auch analog zu Fig. 9 vorgesehen sein, das Verbindergehäuse 36 bzw. 38 als einstückiges Formteil mit seinen klappbar insbesondere über mindestens ein Filmscharnier (40c) miteinander verbundenen Halbschalen auszubilden.

Optional können die Gehäuse-Halbschalen im Bereich ihrer im geschlossenen Zustand aneinander liegenden Anlageränder bestimmte Dichtmittel, wie z. B. ineinander greifende Dichtkonturen (z. B. nach Art einer Nut-/Federverbindung) oder angeformte Weichdichtungen (Elastomerbeschichtung) aufweisen.

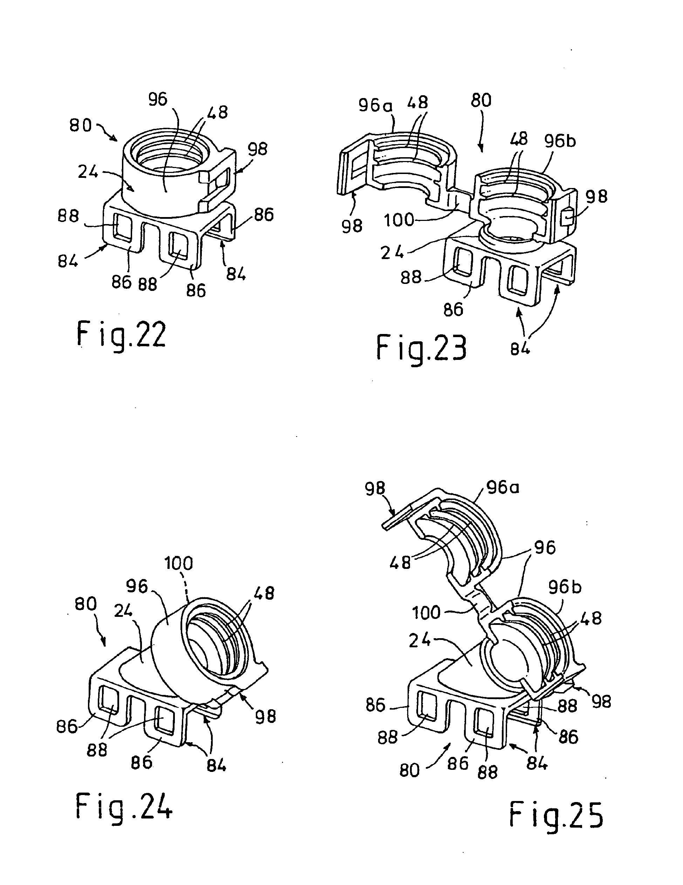

In weiterer vorteilhafter Ausgestaltung der Erfindung ist der Abzweig 24 zur formschlüssigen Aufnahme eines Endbereiches einer rohrförmigen Leiterhülle 46 für die Versorgungsleiter 26 ausgebildet. Analog zu der Umhüllung 28 handelt es sich auch bei der Leiterhülle 46 vorzugsweise um ein Wellrohr aus Kunststoff. Deshalb weist auch der Abzweig 24 eine innere Eingriffskontur mit mindestens einer radial nach innen vorspringenden Umfangsrippe 48 auf (siehe auch Fig. 22 bis 25).

Bei der Ausführungsvariante gemäß Fig. 10 und 11 ist im Bereich des Abzweiges 24 ein elektrisches Anschlusselement 50, insbesondere in Form eines Steckanschlusses, für nicht dargestellte externe Versorgungsleiter befestigt. Dabei kann ein äußerer Anschlussstecker auf- oder eingestreckt und beispielsweise über Rastmittel 52 arretiert werden. Das Anschlusselement 50 ist innerhalb der Kapselung 22 mit den Heizmitteln 18 des Fluidverbinders 4 und/oder gegebenenfalls mit Heizmitteln 54 der angeschlossenen Fluidleitung 8 verbunden.

In bevorzugter Ausgestaltung weist nämlich die Fluidleitung 8 ebenfalls elektrische Heizmittel 54 auf, die insbesondere von mindestens einem schraubenlinienförmig über den Leitungsumfang verlaufenden Heizleiter 56 gebildet sind. Dazu wird insbesondere auf Fig. 1 und 8 verwiesen. Der Heizleiter 56 ist bevorzugt gemeinsam mit der Fluidleitung 8 eng von einer Fixierhülle 57 umschlossen, die z. B. von einem schraubenlinienförmig unter Einschluss des Heizleiters 56 um die Fluidleitung 8 gewickelten Klebeband gebildet sein kann. Der Heizleiter 56 kann aus einem schraubenlinienförmig gewickelt von einem Leitungsende zum anderen Ende verlaufenden Hinleiter und einem ebenfalls schraubenförmig oder aber geradlinig verlaufenden Rückleiter bestehen, wodurch eine gute Verteilung der Heizleistung erreicht wird.

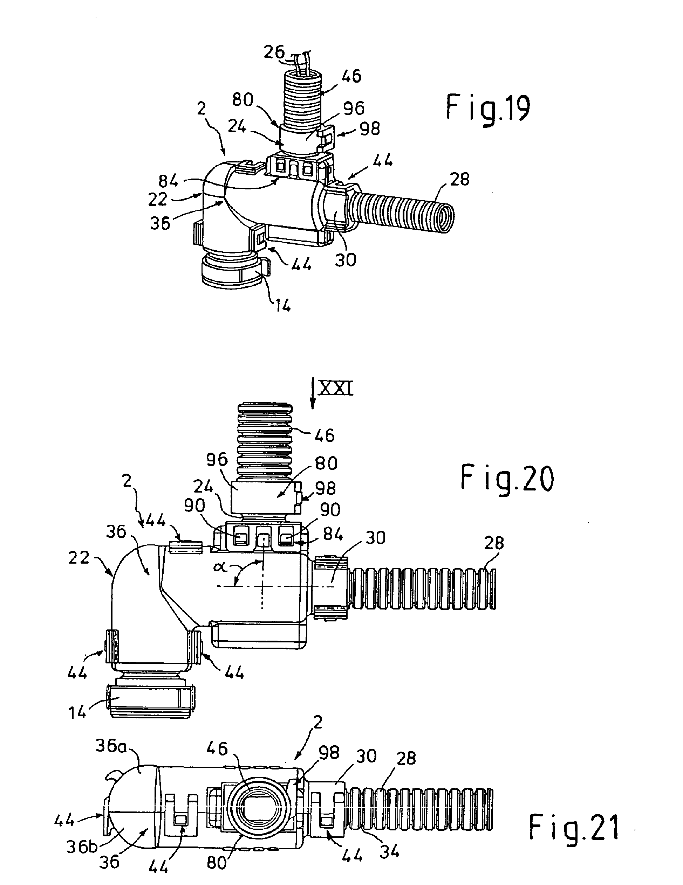

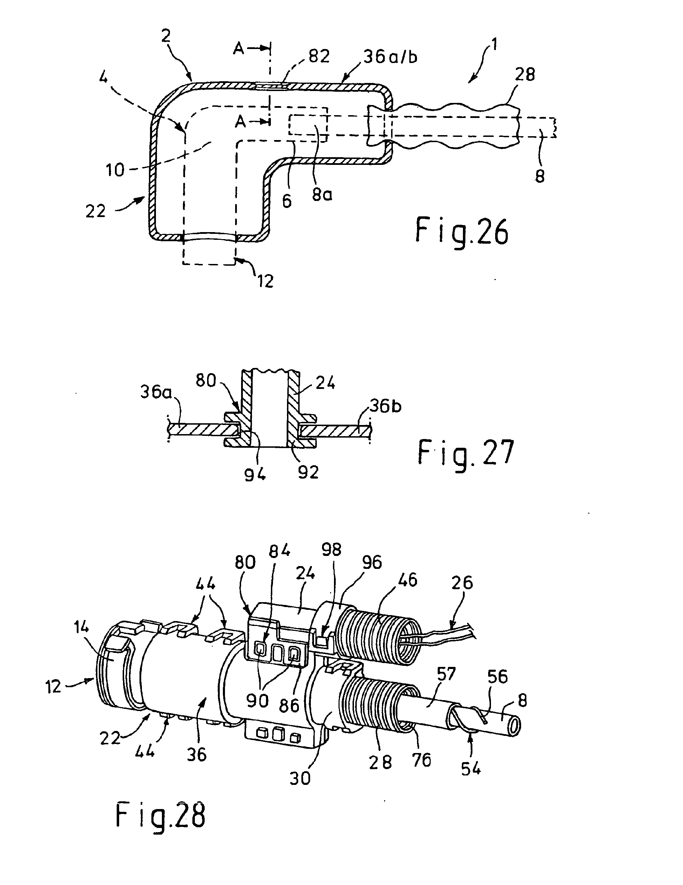

Der Abzweig 24 kann bezüglich seiner Abzweigachse mit einer Anschlussachse der Fluidleitung 8 einen praktisch beliebigen Winkel α einschließen, der bevorzugt aber im Bereich von 20° bis 160° liegt. In den dargestellten Beispielen handelt es sich um einen spitzwinkligen Y-Abzweig, es kann aber auch ein etwa rechtwinkliger T-Abzweig vorgesehen sein (siehe Fig. 19 bis 21). Zudem kann gemäß Fig. 28 der Abzweig 24 auch eine zur Anschlussachse der Leitung 8 parallele Achse aufweisen.

Die Enden der Heizleiter 20, 56 werden insbesondere im Übergangsbereich zwischen dem Fluidverbinder 4 und der Fluidleitung 8 miteinander und/oder mit den äußeren Versorgungsleitern 26 über elektrische Verbindungen 58 verbunden (verschaltet). Zu diesen Verbindungen 58 wird auf die in den Fig. 2 bis 4 veranschaulichten Möglichkeiten verwiesen, die weiter unten noch genauer erläutert werden.

In vorteilhafter Ausgestaltung sind/ist der Fluidverbinder 4 und/oder die angeschossene Fiuidleitung 8 bereichsweise unter Einschluss der elektrischen Verbindungen 58 der Heizmittel 18, 54 mit einer Kunststoff-Formmasse, insbesondere mit einem thermoplastischen Formteilwerkstoff, z. B. auf PA-Basis, umgeben (umformt, z. B. umspritzt oder vergossen). Dieses Anformen mit Kunststoff erfolgt insbesondere im Übergangsbereich zwischen dem Anschlussabschnitt 6 des Fluidverbinders 4 und der angeschlossenen Fluidleitung 8. Hierdurch entsteht eine vergossene Baueinheit aus dem Fluidverbinder 4 und der Fluidleitung 8 mit deren Heizmitteln 18, 54, wobei die erforderlichen elektrischen Verbindungen 58 in einem angeformten Ansatzteil 60 eingebettet und dadurch vor jeglichen mechanischen und sonstigen Einflüssen geschützt sowie auch gegeneinander elektrisch isoliert sind. Dabei sind das Ansatzteil 60 bezüglich seiner Außenkontur und die Kapselung 22 bezüglich ihrer Innenkontur so aneinander angepasst, dass das Ansatzteil 60 formschlüssig in der Kapselung 22 untergebracht ist. Gemäß Fig. 1 schließt das angeformte Ansatzteil 60 vorzugsweise auch ein Ende der Umhüllung 28 der Fluidleitung 8 sowie gegebenenfalls auch ein Ende der Leiterhülle 46 für die Versorgungsleiter 26 mit ein. Dazu weist das Ansatzteil 60 angeformte Ringkragen 62 auf.

Im Übrigen besteht das Ansatzteil 60 aus einem etwa zylindrischen Basisabschnitt 64, der den Übergangsbereich zwischen Anschlussabschnitt 6 und Fluidleitung 8 umschließt. Weiterhin kann das Ansatzteil 60 flansch- oder flügelartige, diametral in einer Ebene gegenüberliegende Ansätze 66 aufweisen, die von dem Basisabschnitt 64 ausgehen. Die Ansätze 66 bewirken eine effektive Verdrehsicherung des Ansatzteils 60 innerhalb der Kapselung 22 und können auch zur Unterbringung der elektrischen Verbindungen 58 an beliebigen Stellen benutzt werden (vgl. Fig. 3b und 4b).

Die Bildung des Ansatzteils 60 erfolgt in einem geeigneten Formwerkzeug. Dieses Werkzeug kann beispielsweise stiftförmige Positionierungselemente für die elektrischen Verbindungen 58 aufweisen, um diese während des Formvorgangs so zu positionieren, dass sie optimal in den Kunststoff eingebettet werden. Zudem sollen auch Berührungen der metallischen, abisolierten Enden der Heizleiter vermieden werden. Durch diese Positionieransätze entstehen nach dem Formvorgang gemäß Fig. 1 und 3b, 4b Löcher 68, die aber nachfolgend keine Bedeutung mehr halben.

Nach Montage der Kapselung 22 wird vorzugsweise ein dann noch verbleibender Freiraum innerhalb der Kapselung 22 zumindest teilweise mit Kunststoff vergossen. Dazu kann die Kapselung mindestens eine Öffnung 70 (vgl. Fig. 1) zum Einführen einer Kunststoff-Vergussmasse aufweisen. Alternativ kann auch ein in dem Freiraum verbleibendes Luftvolumen zur Wärmeisolation genutzt werden.

Wie sich noch aus Fig. 7 und 8 ergibt, kann die Kapselung 22 außenseitig im Bereich des Verbindergehäuses 36, 38 und/oder im Bereich des Abzweiggehäuses 40 mindestens ein Halteelement 72 zur fixierenden Halterung eines elektrischen, mit den Versorgungsleitern 26 verbundenen Verbinderteils 74 (Fig. 7 und auch Fig. 12) aufweisen. Das Halteelement 72 kann wie dargestellt als Einschub ausgebildet sein. Es dient zur vorübergehenden Fixierung des Verbinderteils 74 während Lagerhaltung und Transport, bis bei der Montage der Anschluss der Versorgungsleiter 26 erfolgt. Es braucht dann nur das Verbinderteil 74 aus dem Halteelement 72 entnommen und mit einem nicht dargestellten Gegenverbinder verbunden zu werden. Die Halterung des Verbinderteils 74 kann natürlich auch auf andere geeignete Weise erfolgen, insbesondere kraft- und/oder formschlüssig oder auch mittels eines Klettverschlusses oder dergleichen.

An dieser Stelle sollen anhand der Fig. 2 bis 4 noch verschiedene Möglichkeiten zur elektrischen Verschaltung der Heizmittel 18, 54 erläutert werden. In dem Ersatzschaltbild in Fig. 2 ist der Heizleiter 20 als elektrischer Widerstand R1 veranschaulicht. Der oder die Heizleiter 56 der Fluidleitung 8 sind als Widerstände R2 und R3 eingezeichnet, wobei es sich bevorzugt um Hin- und Rückleiter handelt.

Gemäß Fig. 3 können Versorgungsleiter 26 an eine Reihenschaltung der Heizleiter 20 und 56 angeschlossen werden. Dazu werden die Versorgungsleiter 26 einerseits mit einem ersten Ende des Heizleiters 20 und andererseits mit einem ersten Ende des Heizleiters 56 verbunden, während die anderen beiden Enden der Heizleiter 20, 56 direkt miteinander verbunden werden.

Bei der in Fig. 4 veranschaulichten Verschaltung handelt es sich um eine Parallelschaltung der Heizleiter 20 und 56, indem die Heizleiter 20 und 56 jeweils direkt miteinander und mit einem der Versorgungsleiter 26 verbunden werden.

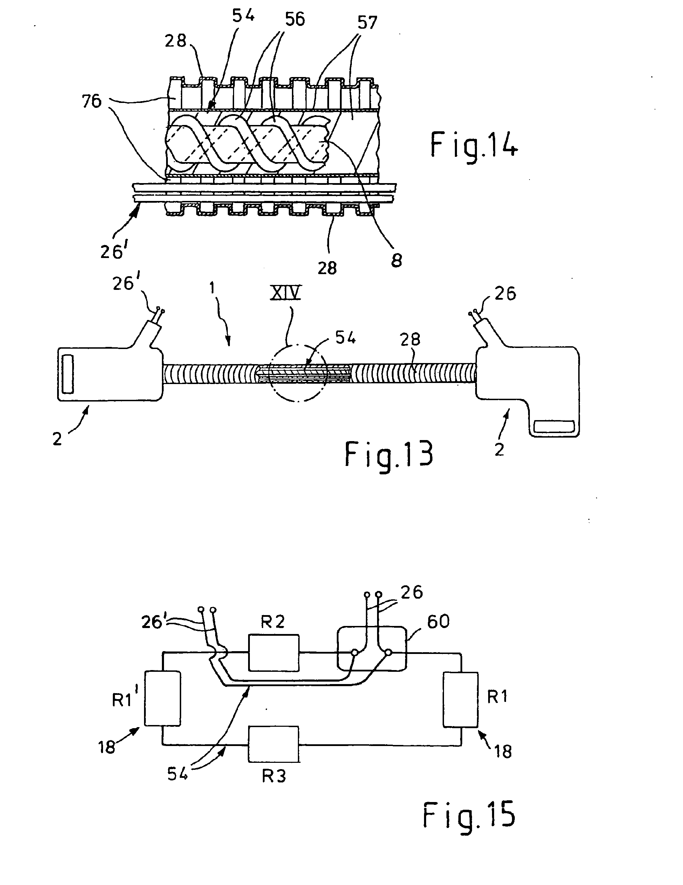

Was noch die Ausführung der Medienleitung 1 gemäß Fig. 13 bis 15 betrifft, so ist diese praktisch als kombinierte Fluid- und Elektroleitung ausgebildet, indem innerhalb der Umhüllung 28 zusätzliche elektrische Leiter 26' auf direktem Weg zwischen den Leitungsverbindem 2 verlaufen. Gemäß Fig. 14 verlaufen die Leiter 26' bevorzugt in einem im Querschnitt ringförmigen Freiraum 76 zwischen der mit den Heizleitern 56 und vorzugsweise der Fixierhülle 57 umschlossenen Fluidleitung 8 und der Umhüllung 28. Die Leiter 26' dienen zur Weiterführung einer Versorgungsspannung (z. B. einer Fahrzeug-Bordspannung) zwischen den Leitungsverbindern 2, so dass vorteilhafterweise die Versorgungsspannung wahlweise an jedem der Verbinder 2, insbesondere über deren Abzweige 24, zugeführt oder abgegriffen werden kann. Dazu wird auch auf das Schaltbild in Fig. 15 verwiesen.

In den Ausführungsformen gemäß Fig. 16 bis 28 ist der Abzweig 24 Bestandteil eines separaten, mit der Kapselung 22 verbundenen oder verbindbaren Abzweigteils 80. Dazu wird auch auf die gesonderten Darstellungen in Fig. 22 bis 25 verwiesen.

Das Abzweigteil 80 ist bevorzugt lösbar (trennbar) mit dem Verbindergehäuse 36 verbunden oder verbindbar.

In den Ausführungen gemäß Fig. 16 bis 25 und auch gemäß Fig. 28 ist das Abzweigteil 80 im Bereich einer Öffnung 82 (nur in Fig. 17 zu erkennen) des Verbindergehäuses 36 mit diesem über Rastmittel 84 verbunden oder verbindbar. Wie sich aus Fig. 22 bis 25 ergibt, weist dazu das Abzweigteil 80 einen etwa U-förmigen Verbindungsabschnitt auf, der einen Bereich des Verbindergehäuses 36 übergreift, wobei Rastarme 86 mit Rastöffnungen 88 Rastansätze 90 rastend formschlüssig übergreifen.

Bei der alternativen Ausführung gemäß Fig. 26 und 27 weist das Abzweigteil 80 einen Verbindungsabschnitt 92 mit einer umfangsgemäßen Nutausnehmung 94 auf, mit der das Abzweigteil 80 im Bereich der in der Teilungsebene der Gehäusehälften 36a, b liegenden Öffnung 82 des Verbindergehäuses 36 formschlüssig zwischen die Gehäuseteile 36a und 36b eingesetzt oder einsetzbar ist.

In allen Ausführungen kann die Öffnung 82 des Verbindergehäuses 36 vorgefertigt sein. Bevorzugt ist aber die Öffnung 82 durch Entfernen von mindestens einem ursprünglich vorhandenen Gehäusebereich herstellbar. Es kann sich um Wandungsabschnitte der Gehäuseteile 36a, 36b handeln, die über Sollbruchstellen herausbrechbar sind.

In weiterer vorteilhafter Ausgestaltung weist das Abzweigteil 80 zur formschlüssigen Aufnahme des Endbereiches der rohrförmigen Leiterhülle 46 für die Versorgungsleiter 26 einen rohrstückförmigen Aufnahmeabschnitt 96 für die Leiterhülle 46 auf. Wie sich insbesondere aus Fig. 22 bis 25 ergibt, besteht der Aufnahmeabschnitt 96 aus diametral geteilten Hälften 96a, 96b, wobei die eine Hälfte 96a unter Einschluss des Endes der Leiterhülle 46 mit der anderen Hälfte 96b verbindbar, insbesondere verrastbar ist. Dazu sind Rastmittel 98 analog zu den Rastmitteln 44 vorgesehen. Die Hälften 96a, 96b können einstückig über ein Filmscharnier 100 schwenkbeweglich und dadurch schließbar miteinander verbunden sein. Der Aufnahmeabschnitt 96 weist in seinem Inneren eine Eingriffskontur mit mindestens einer radial nach innen vorspringenden Umfangsrippe 32 auf, die in eine Rille des die Leiterhülle 46 bildenden Wellrohrs eingreift.

Im Falle eines spitz- oder stumpfwinkligen oder auch parallelen Abzweigs ist die separate Ausgestaltung des Abzweigteils 80 von besonderem Vorteil, weil gemäß Fig. 16 einerseits und Fig. 18 andererseits eine Verbindung des Abzweigteils 80 mit dem Verbindergehäuse 36 wahlweise in mindestens zwei unterschiedlichen Ausrichtungen möglich ist. Hierdurch kann die Richtung des Abzweigs 24 variiert werden. Dies gilt entsprechend auch für die Ausführung gemäß Fig. 28.

Abschließend sei nochmals erwähnt, dass sich die Erfindung auch auf die gesamte konfektionierte Medienleitung 1 beispielsweise in einer Ausführung gemäß Fig. 12 oder 13 bezieht. Dabei wird zumindest ein Leitungsverbinder 2 in erfindungsgemäßer Ausgestaltung verwendet. Der Leitungsverbinder 2 kann alle bereits erläuterten Merkmale aufweisen.

## Patentansprüche

1. Leitungsverbinder (2) für Medienleitungen (1), bestehend aus einem Fluidverbinder (4) mit mindestens einem Anschlussabschnitt (6) zur Anschlussverbindung mit einer Fluidleitung (8) sowie mit einem an den Anschlussabschnitt (6) angrenzenden Übergangsabschnitt (10) mit einem inneren Fluidkanal (16), wobei zumindest im Bereich des Übergangsabschnittes (10) elektrische Heizmittel (18) vorgesehen sind, die den Fluidkanal (16) zumindest teilweise umschließen und von mindestens einem über den Außenumfang des Fluidverbinders (4) verlaufenden Heizleiter (20) gebildet sind, wobei eine Kapselung (22) zum Umschließen eines Endbereiches der an dem Anschlussabschnitt (6) angeschlossenen Fluidleitung (8) und eines Endbereiches einer rohrförmigen Umhüllung der Fluidleitung (8) sowie mit einem Abzweig (24) für elektrische Versorgungsleiter (26) für die Heizmittel (18) vorgesehen ist, wobei die Kapselung (22) die im Bereich des Übergangsabschnittes (10) vorhandenen Heizmittel (18) umschließt,
**dadurch gekennzeichnet, dass** der Heizleiter (20) den Übergangsabschnitt (10) spiralförmig umgibt und die Kapselung (22) den Heizleiter (20) einschließt, wobei innerhalb der Kapselung (20) ein Luftspalt ausgebildet ist.

2. Leitungsverbinder nach Anspruch 1,
**dadurch gekennzeichnet, dass** dieKapselung(22)auseinem den Abzweig (24) aufweisenden Verbindergehäuse (36) besteht.

3. Leitungsverbinder nach Anspruch 2,
**dadurch gekennzeichnet, dass** das Verbindergehäuse (36) im Bereich einer Durchführung für die Fluidleitung (8) zur formschlüssigen Aufnahme des Endbereiches der Umhüllung (28) der Fluidleitung (8) ausgebildet ist.

4. Leitungsverbinder nach Anspruch 1,
**dadurch gekennzeichnet, dass** die Kapselung (22) aus einem Verbindergehäuse (38) und einem zusätzlichen, den Abzweig (24) aufweisenden Abzweiggehäuse (40) besteht.

5. Leitungsverbinder nach Anspruch 4,
**dadurch gekennzeichnet, dass** das Abzweiggehäuse (40) aus einem rohrförmigen Durchgangsabschnitt für die Fluidleitung (8) und dem von dem Durchgangsabschnitt abzweigenden Abzweig (24) besteht, wobei der Durchgangsabschnitt einendig direkt mit dem Verbindergehäuse (38) verbunden oder verbindbar ist und vorzugsweise anderendig zur formschlüssigen Aufnahme des Endbereiches der Umhüllung (28) der Fluidleitung (8) ausgebildet ist.

6. Leitungsverbinder nach einem der Ansprüche 2 bis 5,
**dadurch gekennzeichnet, dass** dasVerbindergehäuse(36;38) aus zwei zu einer Teilungsebene im Wesentlichen symmetrischen Gehäuse-Halbschalen (a, b) besteht, die vorzugsweise miteinander über Rastmittel (44) verrastbar sind.

7. Leitungsverbinder nach einem der Ansprüche 4 bis 6,
**dadurch gekennzeichnet, dass** das Abzweiggehäuse (40) aus zwei zu einer Teilungsebene im Wesentlichen symmetrischen Gehäuse-Halbschalen (40a, 40b) besteht, die vorzugsweise miteinander über Rastmittel (42) verrastbar sind.

8. Leitungsverbinder nach Anspruch 6 oder 7,
**dadurch gekennzeichnet, dass** die Gehäuse-Halbschalen (36a, 36b; 38a, 38b; 40a, 40b) als getrennte, vorzugsweise identische Formteile ausgebildet oder als einstückiges Formteil klappbar insbesondere über mindestens ein Filmscharnier (40c) miteinander verbunden sind.

9. Leitungsverbinder nach einem der Ansprüche 1 bis 8,
**dadurch gekennzeichnet, dass** der Abzweig (24) zur formschlüssigen Aufnahme eines Endbereiches einer rohrförmigen Leiterhülle (46) für die Versorgungsleiter (26) ausgebildet ist.

10. Leitungsverbinder nach einem der Ansprüche 1 bis 9,
**dadurch gekennzeichnet, dass** der Abzweig (24) ein elektrisches Anschlusselement (50), insbesondere in Form eines Steckanschlusses, für externe Versorgungsleiter aufweist, wobei das Anschlusselement (50) innerhalb der Kapselung (22) mit den Heizmitteln (18) des Fluidverbinders (4) und/oder gegebenenfalls mit Heizmitteln (54) einer angeschlossenen Fluidleitung (8) verbunden ist.

11. Leitungsverbinder nach einem der Ansprüche 1 bis 10,
**dadurch gekennzeichnet, dass** die Fluidleitung (8) elektrische Heizmittel (54) aufweist, die insbesondere von mindestens einem schraubenlinienförmig über den Leitungsumfang verlaufenden Heizleiter (56) gebildet sind.

12. Leitungsverbinder nach einem der Ansprüche 1 bis 11,
**dadurch gekennzeichnet, dass** der Abzweig (24) bezüglich seiner Abzweigachse mit einer Fluidleitungs-Anschlussachse einen Winkel (α) im Bereich von 20° bis 160° einschließt oder etwa parallel zu der Anschlussachse ausgerichtet ist.

13. Leitungsverbinder nach einem der Ansprüche 1 bis 12,
**dadurch gekennzeichnet, dass** der Fluidverbinder (4) und/oder eine angeschlossene Fluidleitung (8) unter Einschluss von elektrischen Verbindungen (58) der Heizmittel (18, 54) mit einer Kunststoff-Formmasse umgeben sind/ist.

14. Leitungsverbinder nach einem der Ansprüche 1 bis 13,
**dadurch gekennzeichnet, dass** derAbzweig(24)alsseparates, mit der Kapselung (22) verbundenes oder verbindbares Abzweigteil (80) ausgebildet ist.

15. Leitungsverbinder nach Anspruch 14,
**dadurch gekennzeichnet, dass** das Abzweigteil (80) im Bereich einer Öffnung (82) des Verbindergehäuses (36) mit diesem über Rastmittel (84) verbunden oder verbindbar ist oder im Bereich einer in einer Teilungsebene liegenden Öffnung (82) des Verbindergehäuses (36) formschlüssig zwischen zwei Gehäuse-Teile (36a, 36b) eingesetzt oder einsetzbar ist.

16. Konfektionierte Medienleitung (1), bestehend aus mindestens einem Leitungsverbinder (2) nach einem der Ansprüche 1 bis 15 und einer angeschlossenen Fluidleitung (8) und einer Leitungs-Umhüllung (28) und mit zwei endseitig verbundenen Leitungsverbindern (2),
**dadurch gekennzeichnet, dass** innerhalbderUmhüllung(28), insbesondere in einem Freiraum (76) zwischen der Fluidleitung (8) und der Umhüllung (28), mindestens ein, bevorzugt mindestens zwei elektrische Leiter (26') verlaufen, die Anschlüsse für äußere Versorgungsleiter im Bereich der Abzweige (24) der Leitungsverbinder (2) miteinander verbinden.

## Claims

1. A line connector (2) for media lines (1), composed of a fluid connector (4) having at least one attachment section (6) for attachment connection to a fluid line (8) and having a transition section (10) which adjoins the attachment section (6) and has an inner fluid duct (16), with electrical heating means (18) being provided at least in the region, of the transition section (10) which heating means (18) at least partially surround the fluid duct (16) and are formed by at least one heat conductor (20) which runs over the outer circumference of the fluid connector (4), wherein a casing (22) for surrounding an end region of the fluid line (8) attached to the attachment section (6) and an end region of a tubular sheathing of the fluid line (8) and having a branch (24) for electrical supply cables (26) for the heating means (18) is provided, wherein the casing (22) surrounds the heating means (18) present in the region of the transition section (10), **characterized in that** the heat conductor (20) spirally surrounds the transition section (10) and the casing (22) encloses the heat conductor (20), wherein an air gap is formed within the casing (22).

2. The line connector as claimed in claim 1, **characterized in that** the casing (22) is composed of a connector housing (36) which has the branch (24).

3. The line connector as claimed in claim 2,
**characterized in that** the connector housing (36) is formed, in the region of a leadthrough for the fluid line (8), to hold the end region of the sheathing (28) of the fluid line (8) in a positively locking fashion.

4. The line connector as claimed in claim 1,
**characterized in that** the casing (22) is composed of a connector housing (38) and an additional branch housing (40) which has the branch (24).

5. The line connector as claimed in claim 4,
**characterized in that** the branch housing (40) is composed of a tubular passage section for the fluid line (8) and of the branch (24) which branches off from the passage section, with the passage section being connected or connectable at one end directly to the connector housing (38) and preferably being designed at the other end to hold the end region of the sheathing (28) of the fluid line (8) in a positively locking fashion.

6. The line connector as claimed in one of claims 2 to 5,
**characterized in that** the connector housing (36; 38) is composed of two housing half shells (a, b) which are substantially symmetrical in relation to a parting plane and which can preferably be latched to one another by latching means (44).

7. The line connector as claimed in one of claims 4 to 6,
**characterized in that** the branch housing (40) is composed of two housing half shells (40a, 40b) which are substantially symmetrical with respect to a parting plane and which can preferably be latched to one another by latching means (42).

8. The line connector as claimed in claim 6 or 7,
**characterized in that** the housing half shells (36a, 36b; 38a, 38b; 40a, 40b) are formed as separate, preferably identical molded parts or, as a single-piece molded part, are connected to one another in a hinged fashion in particular by means of at least one film hinge (40c).

9. The line connector as claimed in one of claims 1 to 8,
**characterized in that** the branch (24) is designed to hold an end region of a tubular cable sheath (46) for the supply cables (26) in a positively locking fashion.

10. The line connector as claimed in one of claims 1 to 9,
**characterized in that** the branch (24) has an electrical connection element (50), in particular in the form of a plug connection, for external supply cables, with the connection element (50) being connected within the casing (22) to the heating means (18) of the fluid connector (4) and/or if appropriate to heating means (54) of an attached fluid line (8).

11. The line connector as claimed in one of claims 1 to 10,
**characterized in that** the fluid line (8) has electrical heating means (54) which are formed in particular by at least one heat conductor (56) which runs in a helical fashion over the circumference of the line.

12. The line connector as claimed in one of claims 1 to 11,
**characterized in that** the branch (24), with regard to its branch axis, encloses an angle (α) in the range from 20° to 160° with a fluid line attachment axis or is aligned approximately parallel to the attachment axis.

13. The line connector as claimed in one of claims 1 to 12,
**characterized in that** the fluid connector (4) and/or an attached fluid line (8) are/is encased with a plastic molding compound with the encompassment of electrical connections (58) of the heating means (18, 54).

14. The line connector as claimed in one of claims 1 to 13,
**characterized in that** the branch (24) is designed as a separate branch part (80) which is or can be connected to the casing (22).

15. The line connector as claimed in claim 14,
**characterized in that** the branch part (80) is or can be connected by latching means (84) to the connector housing (36) in the region of an opening (82) of said connector housing (36), or is or can be inserted in a positively locking fashion between two housing parts (36a, 36b) in the region of an opening (82), which is situated in a parting plane, of the connector housing (36).

16. An assembled media line (1) composed of at least one line connector (2) as claimed in one of claims 1 to 15 and of an attached fluid line (8) and of a line sheathing (28) an having two line connectors (2) connected at the end side,
**characterized in that** at least one, preferably at least two electrical cables (26') run within the sheathing (28), in particular in a free space (76) between the fluid line (8) and the sheathing (28), which electrical cables (26') connect connectors for external supply cables in the region of the branches (24) of the line connectors (2) to one another.

## Revendications

1. Raccord (2) pour conduits de fluides (1), constitué d'un raccord de fluide (4) avec au moins une section de raccordement (6) pour la jonction avec un conduit de fluide (8), ainsi qu'avec une section de transition (10) limitrophe à la section de raccordement (6) et pourvue d'un canal de fluide (16) intérieur, des moyens de chauffage électriques (18) étant prévus au moins dans la zone de la section de transition (10), lesquels entourent au moins en partie le canal de fluide (16) et sont formés par au moins un conducteur chauffant (20) qui s'étend sur le pourtour extérieur du raccord de fluide (4), un blindage (22) étant prévu pour entourer une zone d'extrémité du conduit de fluide (8) qui est raccordée à la section de raccordement (6) et une zone d'extrémité d'un gainage tubulaire du conduit de fluide (8), ainsi qu'à une dérivation (24) pour des conducteurs d'alimentation électriques (26) des moyens de chauffage (18), le blindage (22) entourant les moyens de chauffage (18) présents dans la zone de la section de transition (10),
**caractérisé en ce que** le conducteur chauffant (20) entoure la section de transition (10) en forme de spirale et le blindage (22) renferme le conducteur chauffant (20), un entrefer étant réalisé à l'intérieur du blindage (20).

2. Raccord pour conduits selon la revendication 1
**caractérisé en ce que** le blindage (22) est constitué d'un boîtier de raccord (36) présentant la dérivation (24).

3. Raccord pour conduits selon la revendication 2,
**caractérisé en ce que** le boîtier de raccord (36) est réalisé dans la zone d'une traversée pour le conduit de fluide (8), destinée à recevoir par coopération de forme la zone d'extrémité du gainage (28) du conduit de fluide (8).

4. Raccord pour conduits selon la revendication 1,
**caractérisé en ce que** le blindage (22) est constitué d'un boîtier de raccord (38) et d'un boîtier de dérivation supplémentaire (40), qui présente la dérivation (24).

5. Raccord pour conduits selon la revendication 4,
**caractérisé en ce que** le boîtier de dérivation (40) est constitué d'une section de passage tubulaire pour le conduit de fluide (8) et de la dérivation (24) en branchement sur la section de passage, la section de passage étant raccordée ou raccordable, à une extrémité, directement avec le boîtier de raccord (38) et étant réalisée de préférence, à l'autre extrémité, pour recevoir par coopération de forme la zone d'extrémité du gainage (28) du conduit de fluide (8).

6. Raccord pour conduits selon l'une des revendications 2 à 5,
**caractérisé en ce que** le boîtier de raccord (36 ; 38) est constitué de deux demi-coques de boîtier (a, b) essentiellement symétriques par rapport à un plan de joint, lesquelles sont de préférence mutuellement encliquetables par l'intermédiaire de moyens d'enclenchement (44).

7. Raccord pour conduits selon l'une des revendications 4 à 6,
**caractérisé en ce que** le boîtier de dérivation (40) est constitué de deux demi-coques de boîtier (40a, 40b) essentiellement symétriques par rapport à un plan de joint, lesquelles sont de préférence mutuellement encliquetables par l'intermédiaire de moyens d'enclenchement (42).

8. Raccord pour conduits selon l'une des revendications 6 et 7,
**caractérisé en ce que** les demi-coques de boîtier (36a, 36b ; 38a, 38b ; 40a, 40b) sont réalisées sous forme de pièces moulées séparées, de préférence identiques, ou sont assemblées entre elles par rabattement, sous forme de pièce moulée monobloc, en particulier par l'intermédiaire d'au moins une charnière pelliculaire (40c).

9. Raccord pour conduits selon l'une des revendications 1 à 8,
**caractérisé en ce que** la dérivation (24) est réalisée pour recevoir par coopération de forme une zone d'extrémité d'une gaine de conducteurs tubulaire (46) pour les conducteurs d'alimentation (26).

10. Raccord pour conduits selon l'une des revendications 1 à 9,
**caractérisé en ce que** la dérivation (24) présente un élément de raccordement électrique (50), en particulier en forme d'une prise de courant enfichable, pour des conducteurs d'alimentation externes, l'élément de raccordement (50) étant relié à l'intérieur du blindage (22) aux moyens de chauffage (18) du raccord de fluide (4) et/ou éventuellement aux moyens de chauffage (54) d'un conduit de fluide (8) raccordé.

11. Raccord pour conduits selon l'une des revendications 1 à 10,
**caractérisé en ce que** le conduit de fluide (8) présente des moyens de chauffage électriques (54), qui sont formés en particulier d'au moins un conducteur chauffant (56) en forme d'hélice, s'étendant sur le pourtour du conduit.

12. Raccord pour conduits selon l'une des revendications 1 à 11,
**caractérisé en ce que** la dérivation (24) forme un angle (α) dans la plage de 20° à 160° par rapport à son axe de dérivation avec un axe de raccordement du conduit de fluide, ou est orientée à peu près parallèlement par rapport à l'axe de raccordement.

13. Raccord pour conduits selon l'une des revendications 1 à 12,
**caractérisé en ce que** le raccord de fluide (4) et/ou un conduit de fluide raccordé (8) est/sont entouré/s d'une matière moulable en matière plastique en incluant des liaisons électriques (58) des moyens de chauffage (18, 54).

14. Raccord pour conduits selon l'une des revendications 1 à 13,
**caractérisé en ce que** la dérivation (24) est réalisée sous forme de pièce de dérivation (80) séparée, assemblée ou pouvant être assemblée avec le blindage (22).

15. Raccord pour conduits selon la revendication 14,
**caractérisé en ce que** la pièce de dérivation (80) est assemblée ou peut être assemblée, par l'intermédiaire de moyens d'encliquetage (84), avec le boîtier de raccord (36) dans la zone d'une ouverture (82) de ce dernier, ou est mise en place ou peut être mise en place par coopération de forme entre deux parties de boîtier (36a, 36b) dans la zone d'une ouverture (82), située dans un plan de joint, du boîtier de raccord (36).

16. Conduit pour fluides confectionné (1), constitué d'au moins un raccord pour conduits (2) selon l'une des revendications 1 à 15 et d'un conduit de fluide raccordé (8) et d'un gainage de conduit (28), et avec deux raccords pour conduits (2) assemblés du côté extrême,
**caractérisé en ce qu'**au moins un, de préférence au moins deux conducteurs électriques (26') s'étendent à l'intérieur du gainage (28), en particulier dans un dégagement (76) entre le conduit de fluide (8) et le gainage (28), lesquels conducteurs (26) relient entre elles des jonctions pour des conducteurs d'alimentation extérieurs dans la zone des dérivations (24) des raccords pour conduits (2).
